Europäisches Patentamt

European Patent Office

Office européen des brevets

(11) Publication number: **0 044 868**
**B1**

(12) **EUROPEAN PATENT SPECIFICATION**

(45) Date of publication of patent specification: **28.11.84**

(51) Int. Cl.³: **H 01 M 2/16**

(21) Application number: **81900611.5**

(22) Date of filing: **30.01.81**

(86) International application number:
**PCT/US81/00157**

(87) International publication number:
**WO 81/02368 20.08.81 Gazette 81/20**

(54) **SEPARATOR WITH IMPROVED TENSILE STRENGTH FOR STARVED ELECTROLYTE LEAD/ACID BATTERY.**

(30) Priority: **04.02.80 US 117906**

(43) Date of publication of application:
**03.02.82 Bulletin 82/05**

(45) Publication of the grant of the patent:
**28.11.84 Bulletin 84/48**

(84) Designated Contracting States:
**AT CH DE FR GB LI LU NL SE**

(56) References cited:
**EP-A-0 003 481**
**WO-A-79/01057**
**WO-A-80/01969**
**FR-A-2 263 609**
**US-A- 636 142**
**US-A- 693 676**
**US-A-1 879 562**
**US-A-1 942 668**
**US-A-2 428 470**
**US-A-2 634 207**
**US-A-2 634 208**
**US-A-3 010 835**
**US-A-3 042 578**

(73) Proprietor: **JOHNS-MANVILLE CORPORATION**
**Ken-Caryl Ranch Post Office Box 5108**
**Denver, CO 80217 (US)**

(72) Inventor: **GROSS, Stephen Edward**
**6301 West Alder Avenue**
**Littleton, CO 80123 (US)**
Inventor: **SCHEFFEL, Norman Bach**
**362 Woodland Trail**
**Parker, CO 80134 (US)**

(74) Representative: **Siebert . Grättinger & Bockhorni**
**Postfach 1649 Almeidaweg 35**
**D-8130 Starnberg (München) (DE)**

(56) References cited:
**US-A-3 085 126**
**US-A-3 085 887**
**US-A-3 862 861**
**US-A-4 150 199**

## Description

Technical Field

The invention herein relates to lead/acid electric storage batteries. More particularly it relates to separators and a paper as separator material on such batteries.

Background of the Prior Art

Separators for lead batteries are known comprising glass fibers, synthetic thermoplastic fibers and particulate porous siliceous material (compared FR—A 22 63 609).

Recently efficient maintenance-free rechargeable sealed lead/acid storage batteries utilizing a "starved electrolyte' concept have been introduced commercially. Various aspects of batteries of this type are disclosed in a number of patents, most notably US Patent No. 3 862 861. Such batteries normally utilize as separators materials such as mocroporous rubber, polyvinyl chloride, polyolefins, phenolic resin impregnated paper or (preferably) glass paper made from micorfiber diameter, unwoven, short staple glass fibers. These batteries, while useful in a wide variety of applications, have been severely limited in the practical sizes which can be commercially utilized because of the high cost of these batteries per unit of energy density. Thus, while cells of the common C, D, "beer can" and similar sizes are practical for some purposes commercially, larger sizes such as the typical automotive battery size are far too costly for commercial practicality. Similarly, the high unit density cost of even the smaller size batteries have restricted these types of batteries to high value end uses such as in spacecraft and emergency equipment, effectively eliminating the batteries from the fields of conventional consumer use such as flashlights, radios and the like.

In these types of batteries a very high proportion of the cost of battery materials lies in the cost of the separator. The preferred microfiber glass paper separators are extremely costly. In the past, however, attempts to substitute lower cost materials have led to battery structures with significantly poorer electrical characteristics.

Recently, a low cost high efficiency battery separator composition for starved electrolyte batteries has been developed and described and claimed in International Patent Application WO 80101969 (European Patent Application 80900623.2). This battery separator composition comprises a mixture of 30 percent to 80 percent by weight of expanded perlite and 20 percent to 70 percent by weight, of glass fibers, wherein the glass fibers have diameters in the range of from about 0.3 to about 1.0 micrometers and the perlite has particle sizes in the range of from about 3 to about 100 micrometers. The electrical performance properties of these compositions have been found to be eminently suitable for use in the starved electrolyte lead/acid batteries.

Continued experience with the perlite/glass fiber separator compositions and separators made therefrom have brought to light one significant problem, however. In some battery production methods, the separator is in the form of a long paper strip which is wound in a spiral fashion with the electrical plate materials to form cylindrical batteries. Typical of this type of construction are the batteries shown in the aforementioned U.S. Patent No. 3,862,861. The winding operations to form such batteries are performed at high speed and under high tensile loads. In some cases with the perlite/glass fiber paper strips, the papers have been unable to sustain that high tensile loading and have torn apart. When this occurs, of course, the winding operation must be stopped and the paper tear repaired.

It would therefore be highly desirable to have a separator material having the same electrical performance characteristics and low cost features of the papers of the prior invention, but having increased tensile strength sufficient to allow the paper to be wound rapidly into a cylindrical battery shape without significant amounts of tearing of the paper.

Brief Summary of the Invention

The invention herein comprises the use as a separator in a starved electrolyte lead/acid battery of an improved composition which comprises a mixture of 15 percent to 75 percent by weight of expanded perlite, the perlite having particle sizes in the range of from about 30 to about 100 micrometers; 20 percent to 70 percent by weight of glass fibers, wherein the glass fibers have diameters in the range of from about 0.3 to about 1.0 micrometers and 5 percent to 20 percent by weight of substantially acid-insoluble thermoplastic fibers. These improved compositions have been found to be essentially equivalent in all important chemical and electrical properties to the battery separator compositions of the prior invention, but to have tensile strengths some three to five times greater.

Detailed Description of the Invention

The articles utilizing the compositions are denominated "separators" for the starved electrolyte lead/acid batteries, following the nomenclature of the prior patents, especially the aforesaid U.S. Patent No. 3,862,861. However, it will be recognized from the structure of these starved electrolyte batteries that the articles, unlike separators in conventional batteries, are multifunctional, in that they possess not only a separator function but also a reservoir function, wherein they serve to retain the electrolyte within the battery. It is believed that the microporous nature and the high specific surface area of the present articles, with their myriads of minute passageways and interstices, impart to the articles their ability to combine these different functions. For the purposes of this specification, therefore, the practice of the aforesaid prior patents in labelling these articles "separators" will be adhered to, but the difference between the present multifunctional articles (with their "separa-tor/reservoir" nature) and conventional battery separators should be recognized.

The compositions herein are formed from a mixture of expanded perlite granules, small diameter glass fibers and acid-insoluble thermoplastic fibers.

Perlite is a rhyolitic glassy rock formed by volcanic action. Perlite is unique among the glassy materials in that it contains a significant proportion of combined water which, when the perlite is crushed and rapidly heated, is converted to steam and causes the perlite granules to expand or "pop" to form expanded perlite granules with volumes some 4 to 20 times greater than the volume of the original unexpanded particles. Bulk densities of the expanded materials are commonly in the range of from about 0.03 g/m³ to about 0.25 g/cm³. The high volume, low bulk density expanded perlite has in the past been used in a variety of applications, including as filter aids, thermal insulation, lightweight concrete aggregates and for horticultural use. In some such applications it is used in the form of paper-like sheets made of a mixture of perlite and fibrous material such as glass fibres. However, until the invention described in the aforesaid Application WO 80/01969, expanded perlite had never before been considered as having utility in electric batteries.

In the compositions used in this invention the perlite will be present in the form of generally irregular particles having nominal particle sizes in the range of from about 3 to about 100 micrometers. Most suitable for use in the present invention are those grades of perlite having particle sizes in the range of from about 10 to about 35 micrometers. Suitable grades of perlite are available commercially from Johns-Manville Corporation. The perlite will be present in the composition in an amount of from about 15 percent to about 75 percent, preferably 40 percent to 60 percent, of the composition. (Unless otherwise stated, all percentages herein are by weight.)

Since perlite is a natural material, the compositions of batches taken from different ore bodies or even different parts of the same ore body will vary, sometimes widely, but normally within fairly well defined limits. Typical perlite chemical analyses show 71 percent to 75 percent $SiO_2$, 12 percent to 18 percent $Al_2O_3$, and 7 percent to 9 percent $K_2O$ and $Na_2O$ with the remainder being a wide variety of other oxides and elements including material such as calcium, iron, magnesium and titanium oxides. Typical analyses described in *Industrial Minerals*, page 17 (May, 1977). The exact composition of the perlite is not critical in this invention, as long as the perlite used is chemically and electrically compatible with the other materials in the present separator compositions and also in the assembled batteries.

The glass fibers used in the compositions may be produced from any of a wide variety of glass fiber forming compositions. The fibers formed from such compositions must have average volume surface diameters in the range from 0.3 to 1.0 micrometers. Typical glass compositions for glass fibers useful in this invention include those shown in U.S. Patent No. 3,085,887. The glass fibers will be present in the composition as from about 20 percent to about 70 percent, preferably 30 percent to 50 percent, of the composition. Compositions containing less than about 20 percent of glass fiber do not produce papers with adequate physical integrity to withstand handling, while those with more than about 70 percent glass fiber give no added electrical properties but are significantly costlier.

The third component of the improved separator compositions and articles used in the present invention are acid-insoluble thermoplastic fibers in quantities of 5 to 20 percent, preferably 10 to 15 percent. Any conventional type of acid-insoluble staple or chopped thermoplastic fibers may be used. Typical among the fibers which are useful in this composition are polypropylene fibers ethylene/propylene copolymer fibers, fibers (known under the trademark SARAN), of a polimer containing (predominantly vinylidene chloride units) and fibers as known under the trademark VINYON, comprising a copolymer of vinyl chloride and vinyl acetate. The staple fibers or chopped fibers should have an aspect ratio (i.e. length:diameter ratio) on the order of about 1000:1. The aspect ratio may vary widely, however, as long as the staple or chopped fibers have sufficient length to provide significant increases in tensile strength to the papers and separators as compared to papers and separators of the prior invention not containing such staple or chopped fibers. Since the papers are normally wet-laid from slurries of fibers and perlite, the thermoplastic fibers should not be of undue length so that clumping and other formation problems can be avoided. Those skilled in the art of paper making will be immediately aware of the maximum and minimum practical lengths for chopped fibers or staple fibers in order to get good formation during the paper making process as described below and have good tensile strength in the finished products.

The separator used in the present invention may also contain small amounts (up to a few percent by weight) of other materials such as unexpanded perlite, glass fragments, silica particles and the like. Because the nature of the separator is vitally important to the electrical performance of the finished battery, however, such materials should be present only if they do not detrimentally affect that electrical performance. Since the effect on electrical performance of the various types of potential impurities cannot be readily predetermined, it is preferred that the amount of impurities be minimized and the compositions herein be composed essentially entirely of the expanded perlite, glass fibers and thermoplastic fibers.

The compositions are formed into sheets of paper, from which the separator materials used in the present invention are made, in the manner of conventional paper making. The glass fibers, expanded perlite and thermoplastic fibers are dispersed in an aqueous acid slurry (pH of about 3) which is stirred so as to cause the perlite and fibers to become thoroughly and randomly mixed with each other. The perlite/fiber mixture is then deposited from the slurry onto a conventional paper making screen or wire as in a Fourdrinier machine or a Rotoformer machine to form a matted paper. For these purposes the perlite in the furnish should not contain more than about 5 percent, preferably not more than about 1 percent, of "floaters," which are perlite particles which float on the surface of the water slurry. Floaters are detrimental because they do not get incorporated into the fiber matrix of the paper, but are deposited last as the slurry drains and thus form a loose dusty layer on the surface of the paper. Quantities of floaters greater than those mentioned above merely increase the problem. The paper formed of the fibers and perlite particles is then dried and collected in a conventional manner. Following collection of the dry paper, the paper is heat treated to "seal in" the fibers. This is accomplished by heating the paper at a temperature of approximately 260°F to 280°F (125°C to 135°C) for a short period. In commercial operation, this would normally be carried on by passing the dry paper through hot press rolls where the paper would be in contact with the rolls for a few seconds. Thereafter, the paper may be cut to sizes appropriate for the various size batteries in which the separator materials are to be used.

As examples of the improved composition and papers for use in the present invention, two sets of materials were hand formed in sheets in the laboratory. The first sample contained 50 percent of perlite, 35 percent of glass microfibers and 15 percent of staple fibers as known under the trademark VINYON, comprising a copolymer of vinyl chloride and vinyl acetate. Fiber diameters were approximately 20 micrometers. The paper was heat treated as described above. In the second set of experiments, an indentical composition was made up with the exception that the staple fibers tested were polyethylene staple fibers produced commercially by the Crown Zellerbach Company and sold under the name "synthetic wood pulp." Estimated fiber diameter of the staple materials was in the range of 1 to 5 micrometers. Test results on samples of these two materials indicated that papers used in the present invention including the thermoplastic fiber had from three to five times greater tensile strength than the perlite/glass fiber papers of the aforesaid Application WO 80/01969. The papers used in the present invention will not be expected to show any significant change or deterioration in electrical properties as compared to the perlite/glass fiber papers of aforesaid Application WO 80/01969.

Statement of Industrial Application

The materials are used according to the present invention as separators and reservoirs in starved electrolyte lead/acid storage batteries. Batteries using such materials will in turn find application for many electrical power generating uses including automotive electrical systems.

Claims

1. A starved electrolyte lead/acid battery having separators for absorbing and containing electrolyte, characterized by a separator composition comprising a mixture of 15 percent to 75 percent by weight of expanded perlite, 20 percent to 70 percent by weight of glass fibers and 5 percent to 20 percent by weight of acid-insoluble thermoplastic fibers, said glass fibers having diameters in the range of from 0.3 to 1.0 micrometers and said perlite having particle sizes in the range of from 3 to 100 micrometers.

2. A battery as in claim 1 characterized in that the composition consists of said expanded perlite, glass fibers and thermoplastic fibers except for a minimal amount of impurities.

3. A battery as in claims 1 or 2 characterized in that said expanded perlite is present in an amount of 40 percent to 60 percent by weight of the composition, said glass fibers are present in an amount of 30 percent to 50 percent by weight of the composition and said thermoplastic fibers are present in an amount of 10 to 15 percent by weight.

4. A battery as in any of claims 1 to 3, characterized in that said expanded perlite has particle sizes in the range of from 10 to 35 micrometers.

5. A battery as in any of claims 1 through 4, characterized in that said thermoplastic fibers are selected from polypropylene fibers, ethylene/propylene copolymer fibers, fibers of a polymer containing predominantly vinylidene chloride units and fibers of copolymers of vinyl chloride and vinyl acetate.

6. A battery as in claim 5, characterized in that said thermoplastic fiber are in the form of staple fibers.

7. A paper as separator material in a starved electrolyte lead/acid battery, characterized by the composition characterising any of claims 1 to 6 in matted form.

## Patentansprüche

1. Bleisäurebatterie mit begrenzter Elektrolytaufnahme, die Separatoren zum Aufsaugen und Halten von Elektrolyt aufweist, gekennzeichnet durch eine Separator-Zusammensetzung mit einer Mischung aus 30 bis 80 Gew.% expandierten Perlits, 20 bis 70 Gew.% Glasfasern, und 5 bis 20 Gew.% säureunlöslichen Thermoplastfasern, wobei die Glasfasern einen Durchmesser im Bereich von 0,3 bis 1,0 Mikrometer und das Perlite Partikelgrössen im Bereich von 3 bis 100 Mikrometer aufweisen.

2. Batterie gem. Anspruch 1, dadurch gekennzeichnet, daß die Zusammensetzung bis auf einen kleinen Anteil an Fremdbestandteilen aus expandiertem Perlit, Glasfasern und Thermoplastfasern besteht.

3. Batterie nach Anspruch 1 oder 2, dadurch gekennzeichnet, daß das expandierte Perlit einen Anteil von 40 bis 60 Gew.% an der Zusammensetzung, die Glasfasern einen Anteil von 30 bis 50% Gew.% an der Zusammensetzung und die Thermoplastfasern einen Anteil von 10 bis 15 Gew.% aufweisen.

4. Batterie gem. einem der Ansprüche 1 bis 3, dadurch gekennzeichnet, daß das expandierte Perlit Teilchengrößen im Bereich von 10 bis 35 Mikrometer aufweist.

5. Batterie gem. einem der Ansprüche 1 bis 4, dadurch gekennzeichnet, daß die Thermoplastfasern aus Polypropylenfasern, Äthylen/Propylen-Copolymerfasern, Fasern eines Polymers das vorweigend Vinylinden-Chlorideinheiten enthält und Fasern aus Copolymeren aus Vinyl-chloriden und Vinylacetaten ausgewählt werden.

6. Batterie gem. Anspruch 5, dadurch gekennzeichnet, daß die Thermoplastfasern in der Form von Rohfasern vorliegen.

7. Papier als Separatormaterial bei einer Bleisäurebatterie mit begrenzter Elektrolytaufnahme, gekennzeichnet durch, eine in einem der Ansprüche 1 bis 6 gekennzeichnete zusammensetzung in verfilzter Ausbildung.

## Revendications

1. Batterie plomb/acide à électrolyte appauvri comportant des séparateurs pour absorber et contenir l'électrolyte, caractérisée par une composition de séparateur constituant un mélange de 15 à 75% en poids de perlite expansée, 20 à 70 % en poids de fibres de verre et 5 à 20 % en poids de fibres thermoplastiques insolubles dans l'acide, les fibres de verre ayant des diamètres de la gamme de 0,3 à 1,0 $\mu$m et la perlite ayant des grosseurs de particules de la gamme de 3 à 100 $\mu$m.

2. Batterie selon la revendication 1, caractérisée en ce que la composition est formée de la perlite expansée, des fibres de verre et des fibres thermoplastiques, excepté une quantité minimale d'impuretés.

3. Batterie selon l'une des revendications 1 ou 2, caractérisée en ce que la perlite expansée est présente à raison de 40 à 60 % du poids de la composition, en ce que les fibres de verre sont présentes à raison de 30 à 50 % du poids de la composition, et en ce que les fibres thermoplastiques sont présentes à raison de 10 à 15 % en poids.

4. Batterie selon l'une quelconque des revendications 1 à 3 caractérisée en ce que la perlite expansée a des grosseurs de particules de la gamme de 10 à 35 $\mu$m.

5. Batterie selon l'une quelconque des revendications 1 à 4, caractérisée en ce que les fibres thermoplastiques sont choisies entre les fibres de polypropylène, les fibres de copolymère éthylène/propylène, les fibres d'un polymère contenant principalement des unités chlorure de vinylidène et les fibres de copolymères de chlorure de vinyle et d'acétate de vinyle.

6. Batterie selon la revendication 5, caractérisée en ce que les fibres thermoplastiques sont sous la forme de fibres coupées.

7. Papier en tant que matière de séparateur dans une batterie plomb/acide à électrolyte appauvri, caractérisée par la composition caractérisant l'une quelconque des revendications 1 à 6, sous forme feutrée.